(19) Europäisches Patentamt
European Patent Office
Office européen des brevets

(11) Veröffentlichungsnummer **0 017 897**
**B1**

(12) **EUROPÄISCHE PATENTSCHRIFT**

(45) Veröffentlichungstag der Patentschrift: **10.03.82**

(51) Int. Cl.³: **C 07 C 155/02,** C 08 F 4/00

(21) Anmeldenummer: **80101861.5**

(22) Anmeldetag: **08.04.80**

(54) **Thiocarbamylhydroxylamin-Verbindungen und deren Verwendung als Polymerisationsinitiatoren.**

(30) Priorität: **11.04.79 DE 2914701**

(43) Veröffentlichungstag der Anmeldung: **29.10.80 Patentblatt 80/22**

(45) Bekanntmachung des Hinweises auf die Patenterteilung: **10.03.82 Patentblatt 82/10**

(84) Benannte Vertragsstaaten: **BE DE FR GB**

(56) Entgegenhaltungen: **US-A-3 609 175**

(73) Patentinhaber: **BASF Aktiengesellschaft, Carl-Bosch-Strasse 38, D-6700 Ludwigshafen (DE)**

(72) Erfinder: **Naarmann, Herbert, Dr., Haardtblick 15, D-6719 Wattenheim (DE)**
Erfinder: **Lawson, Alex Johnston, Dr., Johann-Joachim-Becher-Weg 18, D-6500 Mainz (DE)**

EP 0 017 897 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art 99(1) Europäisches Patentübereinkommen).

BUNDESDRUCKEREI BERLIN

Thiocarbamylhydroxylamin-Verbindungen und deren Verwendung als Polymerisationsinitiatoren

Die Erfindung betrifft neue Thiocarbamylhydroxylamin-Verbindungen und deren Verwendung als Polymerisationsinitiatoren.

Der Erfindung lag die Aufgabe zugrunde, Verbindungen zu schaffen, die bei tiefen Temperaturen in Radikale zerfallen, wobei weder Stickstoff noch Sauerstoff als Spaltprodukte frei werden sollen.

Eine weitere Aufgabe der Erfindung war es, neuartige Polymerisationsinitiatoren aufzufinden, die bei Temperaturen von 20 bis 40°C radikalische Polymerisationen von olefinisch ungesättigten Verbindungen auslösen können.

Die Aufgaben wurden gelöst durch Thiocarbamylhydroxylamin-Verbindungen der allgemeinen Formel (I)

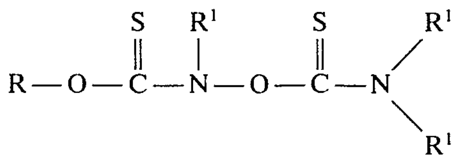

(I)

worin

R = ein aliphatischer, cycloaliphatischer oder — gegebenenfalls substituierter — aromatischer Kohlenwasserstoffrest und

$R^1$ = ein aliphatischer oder cycloaliphatischer Kohlenwasserstoffrest ist.

Bevorzugt sind Verbindungen, in denen der Rest $R^1$ für eine Methylgruppe steht.

Die besonders bevorzugten Verbindungen der Formeln II bis V enthalten als Rest $R^1$ jeweils eine Methylgruppe und als Rest R die Phenyl-, Methyl-, p-Methoxyphenyl- oder die Cyclohexylgruppe:

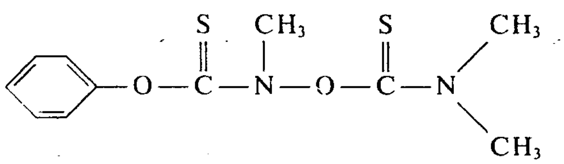

(II)

N-Methyl-N-(phenoxythiocarbonyl)-O-(dimethylthiocarbamoyl)-hydroxylamin.

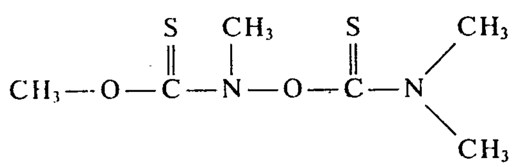

(III)

N-Methyl-N-(methoxythiocarbonyl)-O-(dimethylthiocarbamoyl)-hydroxylamin.

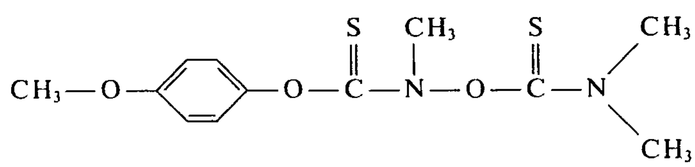

(IV)

N-Methyl-N-(p-methoxyphenoxythiocarbonyl)-O-(dimethylthiocarbamoyl)-hydroxylamin.

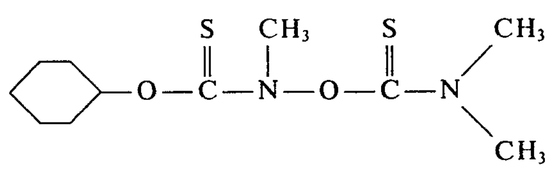

(V)

N-Methyl-N-(cyclohexyloxythiocarbonyl)-O-(dimethylthiocarbamoyl)-hydroxylamin.

Die gestellten Aufgaben wurden weiterhin gelöst durch Verwendung der Verbindungen der allgemeinen Formel (I) als Polymerisationsinitiatoren bei der radikalischen Polymerisation olefinisch ungesättigter Verbindungen bei Temperaturen von 20 bis 40°C.

Die Synthese der erfindungsgemäßen Thiocarbamylhydroxylamin-Verbindungen (I) kann durch Umsetzen von (Ia)

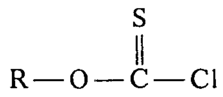

(Ia)

mit (Ib)

$R^1-NHOH \cdot HCl$ (Ib)

zu (Ic)

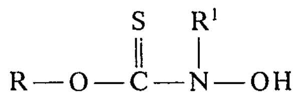

(Ic)

und dessen Umsetzen mit (Id)

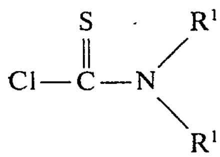

(Id)

zu (I):

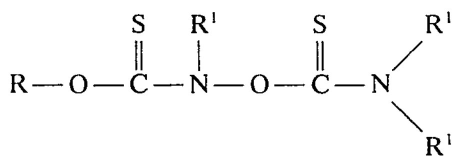

(I)

erfolgen.

Die Verbindung (Ia) kann nach der in J. Amer. Chem. Soc., 77 (1955), Seiten 2479–82, beschriebenen Verfahrensweise hergestellt weden.

Die Herstellung der Verbindungen (Ic) bzw. (I) ist neu, erfolgt aber nach bekannten üblichen klassischen Reaktionen, d. h. durch Umsetzen von Hydroxylaminderivaten mit Säurechloriden zu (Ic) und Modifizieren einer alkoholischen oder phenolischen Hydroxylgruppe mit einem Carbamidsäurechlorid zu (I).

Die Thiocarbamylhydroxylaminverbindungen II bis V sind feste Substanzen mit Schmelzpunkten (Fp) und Halbwertszeiten (t 1/2), gemessen bei 30° C in Toluol, von:

| | Fp | t ½ |
|---|---|---|
| Verbindung II | 70–72°C (Zers.) | 12 min |
| Verbindung III | 80–84°C (Zers.) | 18 min |
| Verbindung IV | 65–68°C (Zers.) | 10 min |
| Verbindung V | >55°C (Zers.) | 24 min |

Die Halbwertszeit t 1/2 ist dabei definiert als diejenige Zeit, bei der die Verbindung, gelöst in Toluol, bei 30° C zur Hälfte zerfallen ist.

Die neuen Thiocarbamylhydroxylamin-Verbindungen (I) können als Polymerisationsinitiatoren bei der radikalischen Polymerisation olefinisch ungesättigter Verbindungen bei Temperaturen von 20 bis 40° C, vorzugsweise von 25 bis 30° C, verwendet werden.

Radikalische Polymerisationen von üblichen, olefinisch ungesättigten monomeren Verbindungen sind allgemein bekannt, und zwar mit Polymerisationsinitiatoren, die aus Peroxiden, Azoverbindungen oder einer Kombination von Oxidations- und Reduktionsmitteln bestehen (vgl. Houben–Weyl, Methoden der Organischen Chemie, Band XIV/1 [1961], Seiten 216–297; Verlag Georg Thieme, Stuttgart). Bei den bekannten und üblichen Polymerisationsverfahren werden aber Peroxide bzw. Azoverbindungen verwendet, die in der Regel Halbwertszeiten des Zerfalls von 18 bis über 50 Stunden,

gemessen in Toluol bei 30° C, aufweisen (vgl. Firmenschrift der Akzo Chemie GmbH, 5160 Düren, »Noury Initiatoren« vom Dezember 1976).

Die mit der Erfindung erzielten Vorteile bestehen also insbesondere darin, daß mit den erfindungsgemäßen Thiocarbamylhydroxylamin-Verbindungen (I) Polymerisationsinitiatoren geschaffen wurden, die Halbwertszeiten des Zerfalls von 10 bis 30 min aufweisen und sich als Initiatoren für radikalische Polymerisationen von üblichen olefinisch ungesättigten Monomeren, wie Styrol, Vinylacetat, Acrylsäureester, Acrylnitril, Acrylsäure, Acrylamid, Methacrylsäuremethylester u. a., bei Raumtemperatur eignen. Ein weiterer Vorteil der erfindungsgemäßen Verbindungen (I) ist in der Tatsache zu sehen, daß bei der radikalischen Spaltung der neuen Verbindungen während der Polymerisation keine gasförmigen Produkte wie Stickstoff oder Sauerstoff freigesetzt werden.

Die Erfindung wird im folgenden anhand der Ausführungsbeispiele näher beschrieben.

## Beispiel 1

Die Polymerisation von Styrol wurde in Substanz unter Stickstoff mit frisch destilliertem Monomer durchgeführt. Auf 10 Gewichtsteile Styrol wurden 0,01 Gewichtsteile der Thiocarbamylhydroxylamin-Verbindung (II) gegeben. Die Mischung wurde unter Stickstoff 24 Stunden stehengelassen. Anschließend erfolgte die Aufarbeitung durch Abziehen des monomeren Styrols bei 0,1 Torr und 30° C (2 Stunden) und 0,05 Torr bei 50° C (1 Stunde). Es wurden 10 Gewichtsteile Polystyrol erhalten, das ein Molekulargewicht $M_n$ (Zahlenmittel), bestimmt nach der osmometrischen Methode, von 12 000 aufwies.

## Beispiele 2 bis 15

Es wurde verfahren wie in Beispiel 1, nur daß anstelle des Styrols ein anderes Monomer eingesetzt wurde. Die Ergebnisse sind in der folgenden Tabelle zusammengefaßt:

| Beispiel | Monomer (10 Gew.-Teile) | Initiator (0,01 Gew.-Teile) | Polymerisat (Gew.-Teile) | Molgewicht $M_n$ |
|---|---|---|---|---|
| 2 | Methacrylsäuremethylester | Verb. (II) | 0,5 | 6800 |
| 3 | Vinylacetat | Verb. (II) | 1,6 | 4900 |
| 4 | Vinylpyrrolidon | Verb. (II) | 9,9 | 7200 |
| 5 | Vinylisobutyläther | Verb. (II) | 0,02 | – |
| 6 | Acrylsäureäthylester | Verb. (II) | – | – |
| 7 | Acrylsäurebutylester | Verb. (II) | 0,02 | – |
| 8 | Acrylnitril | – | – | – |
| 9 | Acrylsäure | Verb. (II) | 0,5 | 3800 |
| 10 | Acrylsäureamid*) | Verb. (II) | 10,0 | 3900 |
| 11 | 5 Gew.-Teile Styrol + 5 Gew.-Teile Maleinsäureanhydrid | Verb. (II) | 10,0 | 4500 |
| 12 | Methacrylsäuremethylester | 0,05 Gew.-Teile Verb. (II) | 2,5 | – |
| 13 | Vinylpyrrolidon | Verb. (IV) | 9,4 | – |
| 14 | Vinylpyrrolidon | Verb. (III) | 9,7 | – |
| 15 | Vinylpyrrolidon | Azodiisobutyronitril | keine Polymerisation | |

*) Gelöst in 10 Gew.-Teilen Dimethylformamid.

In allen Fällen zeigten die Monomeren ohne Initiator keine Polymerisation.

**Patentansprüche**

1. Thiocarbamylhydroxylamin-Verbindungen der allgemeinen Formel (I):

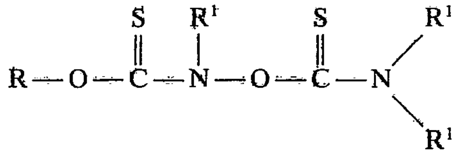

(I)

worin

R = ein aliphatischer, cycloaliphatischer oder — gegebenenfalls substituierter — aromatischer Kohlenwasserstoffrest und
$R^1$ = ein aliphatischer oder cycloaliphatischer Kohlenwasserstoffrest ist.

2. Verbindungen der Formel (I) nach Anspruch 1, dadurch gekennzeichnet, daß der Rest $R^1$ für eine Methylgruppe steht.
3. Verbindung der Formel (I) nach Anspruch 1, dadurch gekennzeichnet, daß der Rest R für eine Phenyl- und der Rest $R^1$ für eine Methylgruppe steht.
4. Verbindung der Formel (I) nach Anspruch 1, dadurch gekennzeichnet, daß die Reste R und $R^1$ für eine Methylgruppe stehen.
5. Verbindung der Formel (I) nach Anspruch 1, dadurch gekennzeichnet, daß der Rest R für eine p-Methoxyphenyl- und der Rest $R^1$ für eine Methylgruppe steht.
6. Verbindung der Formel (I) nach Anspruch 1, dadurch gekennzeichnet, daß der Rest R für eine Cyclohexyl- und der Rest $R^1$ für eine Methylgruppe steht.
7. Verwendung der Verbindungen der Formel (I) nach Anspruch 1 als Polymerisationsinitiatoren bei der radikalischen Polymerisation olefinisch ungesättigter Verbindungen bei Temperaturen von 20 bis 40°C.

**Claims**

1. Thiocarbamyl hydroxylamine compounds of the general formula (I):

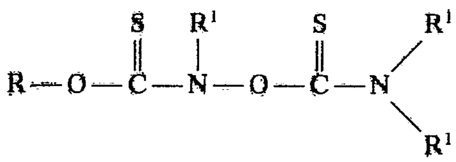

(I)

where R is an aliphatic, cycloaliphatic or — optionally substituted — aromatic hydrocarbon radical, and $R^1$ is an aliphatic or cycloaliphatic hydrocarbon radical.
2. Compounds of the formula (I) as claimed in claim 1, characterized in that $R^1$ denotes methyl.
3. A compound of the formula (I) as claimed in claim 1, characterized in that R denotes phenyl and $R^1$ denotes methyl.
4. A compound of the formula (I) as claimed in claim 1, characterized in that R and $R^1$ each denote methyl.
5. A compound of the formula (I) as claimed in claim 1, characterized in that R denotes p-methoxyphenyl and $R^1$ denotes methyl.
6. A compound of the formula (I) as claimed in claim 1, characterized in that R denotes cyclohexyl and $R^1$ denotes methyl.
7. Use of the compounds of the formula (I) as claimed in claim 1 as polymerization initiators in the free radical polymerization of olefinically unsaturated compounds at temperatures of from 20 to 40°C.

## Revendications

1. Dérivés de la thiocarbamoyl-hydroxylamine de la formule générale (I):

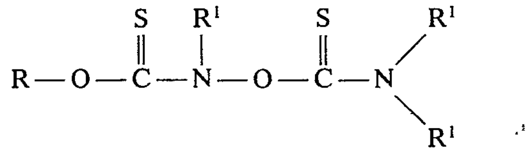

(I)

dans laquelle:

R = un reste d'un hydrocarbure aliphatique, cycloaliphatique, aromatique ou aromatique substitué et

$R^1$ = un reste d'un hydrocarbure aliphatique ou cycloaliphatique.

2. Composés de la formule (I) selon la revendication 1, caractérisés en ce que le symbole $R^1$ désigne un radical méthyle.

3. Composé de la formule (I) selon la revendication 1, caractérisé en ce que le symbole R désigne un groupe phényle et le symbole $R^1$ un radical méthyle.

4. Composé de la formule (I) selon la revendication 1, caractérisé en ce que les symboles R et $R^1$ désignent chacun un radical méthyle.

5. Composé de la formule (I) selon la revendication 1, caractérisé en ce que le symbole R désigne un groupe p-méthoxy-phényle et le symbole R un radical méthyle.

6. Composé de la formule (I) selon la revendication 1, caractérisé en ce que le symbole R désigne un groupe cyclohexyle et le symbole $R^1$ un radical méthyle.

7. Utilisation des composés de la formule (I) selon la revendication 1 comme initiateurs de polymérisations radicalaires de composés à insaturation oléfinique à des températures de 20 à 40° C.